# EUROPEAN PATENT SPECIFICATION

(11) **EP 0 926 945 B1**
(45) Date of publication and mention of the grant of the patent: **23.11.2005**
(21) Application number: 98932627.7
(22) Date of filing: 08.07.1998
(51) Int. Cl.: A01J 5/007, A01J 5/017

(54) **A CONSTRUCTION INCLUDING AN IMPLEMENT FOR MILKING ANIMALS**
KONSTRUCTION MIT GERÄT ZUM MELKEN VON TIEREN
STRUCTURE CONTENANT UNE MACHINE A TRAIRE

(30) Priority: 15.07.1997 NL 1006586
(43) Date of publication of application: 07.07.1999
(73) Proprietor: MAASLAND N.V., 3147 PA Maassluis (NL)
(72) Inventor: VAN DER LELY, Cornelis, CH-6300 Zug (CH)
(74) Representative: Corten, Maurice Jean F.M.
(86) International application number: PCT/NL1998/000389
(87) International publication number: WO 1999/003330

(56) References cited:
- EP-A- 0 551 956
- EP-A- 0 657 097
- EP-A- 0 679 331
- EP-A- 0 764 403
- WO-A-97/13403
- GB-A- 2 303 226
- US-A- 2 534 927
- US-A- 3 931 794
- US-A- 5 152 246

## Description

The invention relates to a construction including an implement of milking animals, such as cows, as described in the preamble of claim 1.

Such an implement is known from EP-A-0 657 097.

The invention aims at yielding more milk by means of the above-mentioned implement. In accordance with the invention, this is achieved by the features of claim 1. In this manner it is possible to choose a favourable milking duration, in such a manner that this results in a higher milk production. According to an inventive feature, the milking duration is variably adjustable. According to again another inventive feature, the milking duration can be adjusted per animal. This makes it possible to classify the animals on the basis of their milk production. According to another inventive feature, the adjusting means comprise a computer.

According to again another aspect of the invention, the implement is provided with a sensor by means of which the milk quantity per unit of time of the animal can be established during milking. According to another aspect of the invention, during milking of the animal, the milk quantity per unit of time established by the sensor is inputted per animal into the memory of the computer. According to again another inventive feature, the computer comprises calculating means with the aid of which changes in the milk quantity per unit of time are calculated during milking. On the basis of the milk quantity per unit of time and the milk production derived therefrom, there can be determined a criterion for the milking duration. According to again another inventive feature, there are inputted into the memory of the computer one or more threshold values for dividing the milk quantity per unit of time into flow stretches. In this manner it is possible to divide the milk quantity yielded per unit of time during a milking run into a number of stages in which the milk quantity yielded per unit of time is approximately equal.

In accordance with again another inventive feature, the adjusting means comprise a vacuum and/or milk pump which are/is connected to a teat cup. For the purpose of influencing the milking rate, according to an inventive feature, the capacity of the vacuum and/or milk pump is variably adjustable. According to an aspect of the invention, the adjusting means comprise a control mechanism by means of which the vacuum and/or milk pump is adjusted on the basis of the changes in the milk quantity per unit of time during milking. When it appears that an animal easily gives milk during a specific period of time, by means of the control mechanism the capacity of the vacuum and/or milk pump can be increased, so that the milk is yielded at a higher rate. In this manner a large quantity of milk can be yielded during a short period of time.

According to a further feature of the invention the milk production can be controlled by means of a further pump.

According to a further inventive feature, the adjusting means comprise time adjusting means with the aid of which the duration of a milking run can be adjusted per animal. This enables only to milk the animal during that time when the milk quantity yielded per unit of time is relatively large. In a preferred embodiment of the invention, the duration of a milking run amounts to approximately 3 minutes. Such a duration has appeared to result in a very high milk production per day.

According to another inventive feature, on the basis of the milk quantity per unit of time determined by the sensor and the milk production derived therefrom, the duration of the milking run is calculated by the computer, in such a manner that there is obtained a high milk production per animal.

In a preferred embodiment of the invention, the implement comprises a milking robot for automatically connecting teat cups to the teats of an animal to be milked.

It is not part of the invention to end milking when the actual milk yield has exceeded the optimal milk yield.

The invention will be explained in further detail with reference to the accompanying diagrams and drawing.
Figure 1 shows a diagram in which the milking rate in quantity per unit of time and the milk production in quantity are set out against time;
Figure 2 shows a diagram in which the milk quantity yielded per 24 hours is set out against the milking time;
Figure 3 shows a plan view of a milk box including a milking robot according to the invention.

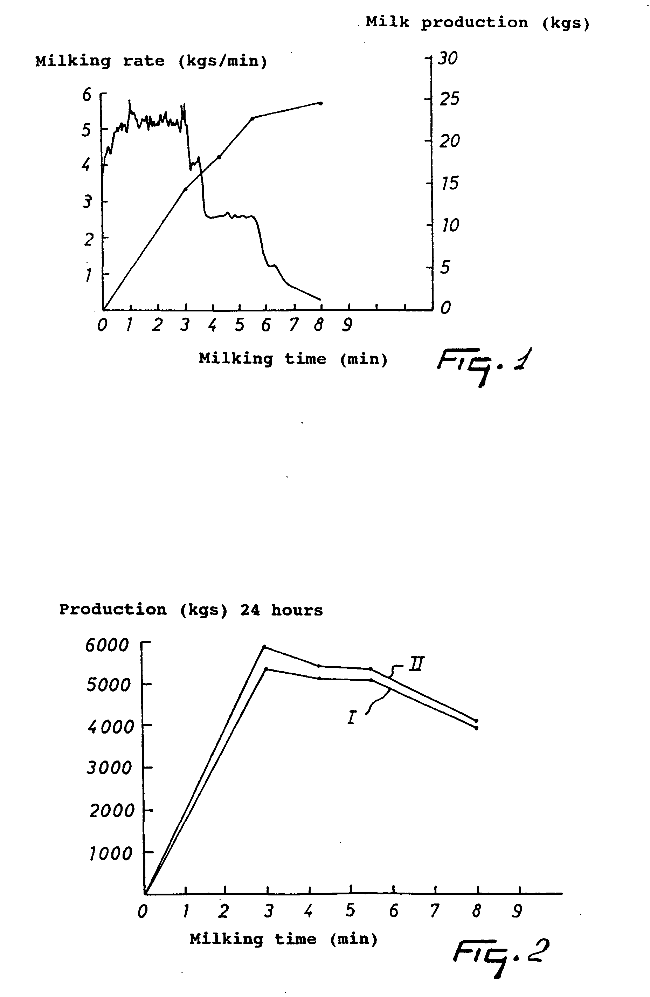

Figures 1 and 2 will be explained in further detail with reference to the undermentioned tables, in the second one of which it is assumed that the time in which the teat cups are connected to the teats of an animal to be milked is four times as short as in table 1. The teat cups may be connected to the teats of an animal to be milked both by hand and by means of a milking robot.

**Table 1**

| milking time (min.) | cow in/ cow out of milkbox (min.) | connection of the teat cups (min.) | total time (min.) | number of milking runs per 24 h. | production per milking run (kg) | production per 24 h. (kg) |
|---|---|---|---|---|---|---|
| 3 | 0.5 | 0.4 | 3.9 | 369 | 14.5 | 5,354 |
| 4.2 | 0.5 | 0.4 | 5.1 | 282 | 18 | 5,082 |
| 5.5 | 0.5 | 0.4 | 6.4 | 225 | 22.5 | 5,062 |
| 8 | 0.5 | 0.4 | 8.9 | 162 | 24.5 | 3,964 |

**Table 2**

| milking time (min.) | cow in/ cow out of milkbox (min.) | connection to the teat cups (min.) | total time (min.) | number of milking runs per 24 h. | production per milking run (kg) | production per 24 h. (kg) |
|---|---|---|---|---|---|---|
| 3 | 0.5 | 0.1 | 3.6 | 400 | 14.5 | 5,800 |
| 4.2 | 0.5 | 0.1 | 4.8 | 300 | 18 | 5,400 |
| 5.5 | 0.5 | 0.1 | 6.1 | 236 | 22.5 | 5,311 |
| 8 | 0.5 | 0.1 | 8.6 | 167 | 24.5 | 4,102 |

Figure 1 shows a diagram based on an average cow which appears to have a milking time of approximately 8 minutes and whose milking rate pattern during these 8 minutes is indicated by the curve in Figure 1. The milking rate curve is divided into four stretches having a different average milking rate. The transition of one stretch to the other is shown in table 1. For example, the first stretch passes from 0 to 3 minutes; the second stretch from 3 to 4.2 minutes; the third stretch from 4.2 to 5.5 minutes and the fourth stretch from 5.5 to 8 minutes. Figure 1 furthermore shows the milk production after passing through the first, second, third and fourth stretches. By choosing a favourable stretch and consequently a favourable duration of time in which the animal is milked, there is yielded a larger quantity of milk per 24 hours, as shown in Tables 1 and 2. This is due to the fact that the milking machine is only used during that period of time in which the cow gives her milk at the highest rate. The time during which the animal is milked, e.g. 3 minutes, may be adjusted by hand or, as described in the foregoing, may be calculated and adjusted fully automatically by the computer. Starting from a shorter connection time of the teat cups to the teats of an animal to be milked results in a still higher milk production, as shown in Figure 2 and Table 2.

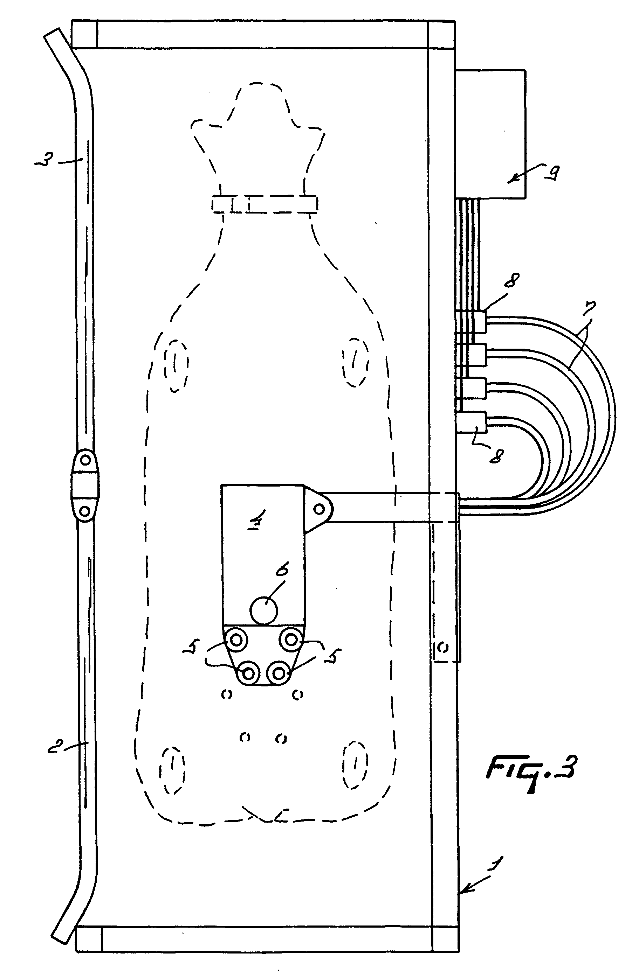

Figure 3 shows a plan view of a milk box 1 provided with an entrance door 2 and an exit door 3. Near a longitudinal side of the milk box 1 there is arranged a milking robot 4 which carries four teat cups 5 near one of its ends. The milking robot 4 is further provided with a sensor 6 for determining the position of the teats of an animal to be milked. The sensor 6 may e.g. be designed as a laser sensor, un ultrasonic sensor or a camera. Each of the teat cups 5 is further provided with a milk hose 7. Each of the milk hoses 7 is connected to a flow meter 8 by means of which during milking the milk quantity yielded per udder quarter can be determined. The flow meters 8 are further connected to a computer 9.

The function is as follows:

By means of a measuring device the milking rate (1/min.) per udder quarter is measured. The information obtained therefrom is converted in the computer so that at any moment the quantity of milk produced (1) is known (cumulatively). When this quantity exceeds a specific value (the optimal quantity), this is indicated in the vicinity of the milking machine by means of a visual signal or an auditive signal, so that the operating person of the milking machine knows that the milking machine has to be disconnected. This signal is preferably activated when the optimal milk quantity has been reached in all quarters. When a milking robot is applied, the robot arm will be given a command to disconnect the teat cup.

## Claims

1. A construction including an implement for milking animals, such as cows, whereby the implement is provided with adjusting means with the aid of which the milking duration, i.e. the period of time in which the animal is milked, is adjustable, the adjusting means comprising a computer, **characterized in that** the computer is suitable to compare the actual milk yield with the optimal milk yield and that, when the actual milk yield has achieved the optimal milk yield, milking is ended such that the milking machine is only used during that period of time in which the cover gives her milk at the highest rate.

2. A construction as claimed in claim 1, **characterized in that** the construction is suitable for carrying out a process in which the milking duration is variably adjustable.

3. A construction as claimed in claim 1 or 2, **characterized in that** the construction is suitable for carrying out a process in which the milking duration is adjustable per animal.

4. A construction as claimed in claim 1 or 2, **characterized in that** the milking duration is automatically adjustable.

5. A construction as claimed in any one of the preceding claims, **characterized in that** the implement is provided with a sensor by means of which the milk quantity per unit of time of the animal can be established during milking.

6. A construction as claimed in claim 5, **characterized in that** during milking an animal the milk quantity per unit of time established by the sensor is inputted per animal into the memory of the computer.

7. A construction as claimed in claim 5 or 6, **characterized in that** the computer comprises calculating means with the aid of which changes in the milk quantity per unit of time are calculated during milking.

8. A construction as claimed in any one of claims 5 to 7, **characterized in that** the memory of the computer is suitable to input at least one threshold value for dividing the milk quantity per unit of time into flow stretches.

9. A construction as claimed in any one of the preceding claims, **characterized in that** the adjusting means comprise a vacuum and/or milk pump which are/is connected to one or more teat cups.

10. A construction as claimed in claim 9, **characterized in that** the capacity of the vacuum and/or milk pump is variably adjustable.

11. A construction as claimed in claim 10, **characterized in that** the adjusting means comprise a control mechanism by means of which the vacuum and/or milk pump is adjusted on the basis of the changes in the milk quantity per unit of time during milking.

12. A construction as claimed in any one of the preceding claims, **characterized in that** the adjusting means comprise time adjusting means with the aid of which the duration of a milking run can be adjusted per animal.

13. A construction as claimed in any one of the preceding claims, **characterized in that** there has been recorded in the time adjusting means that the duration of the milking run amounts to approximately 3 minutes.

14. A construction as claimed in any one of the preceding claims, **characterized in that** the computer is suitable to calculate, on the basis of the milk quantity per unit of time determined by the sensor and the milk quantity derived therefrom, the duration of the milking run, in such a manner that there is obtained a high milk production per animal.

15. A construction as claimed in any one of the preceding claims, **characterized in that** the implement comprises a milking robot for automatically connecting teat cups to the teats of an animal to be milked.

16. A construction as claimed in any one of the preceding claims, **characterized in that** the implement comprises a sensor by means of which the milking rate is determined.

17. A construction as claimed in claim 16, **characterized in that** the implement comprises a calculating unit which, on the basis of the milking rate, determines the quantity of milk produced.

18. A construction as claimed in any one of the preceding claims, **characterized in that** the computer comprises a memory which is suitable to record per animal which animal has been milked and what is the optimal milk production per animal and/or per udder quarter.

19. A construction as claimed in any one of the preceding claims, **characterized in that** the implement is suitable to supply a signal when milking is ended

20. A construction as claimed in claim 19, **characterized in that** the supplied signal is a control signal which is suitable for putting the milking robot out of operation.

21. A construction as claimed in any one of the preceding claims, **characterized in that** the construction comprises at least one air pump and one liquid pump.

22. A construction as claimed in claim 21, **characterized in that** the milk production can be controlled by means of a further pump.

23. A construction as claimed in any one of the preceding claims, **characterized in that** another pump is suitable to control the milking rate.

## Patentansprüche

1. Anlage mit einer Vorrichtung zum Melken von Tieren, wie z. B. Kühen, wobei die Vorrichtung eine Einstellvorrichtung aufweist, mittels der die Melkdauer, d. h. der Zeitraum, in dem das Tier gemolken wird, einstellbar ist, wobei die Einstellvorrichtung einen Computer umfaßt,
**dadurch gekennzeichnet, daß** der Computer geeignet ist, den tatsächlichen Milchertrag mit dem optimalen Milchertrag zu vergleichen, und daß der Melkvorgang beendet wird, wenn der tatsächliche Milchertrag den optimalen Milchertrag erreicht hat, so daß die Melkmaschine nur während des Zeitraumes betrieben wird, in dem die Durchflußmenge der von der Kuh gelieferten Milch am höchsten ist.

2. Anlage nach Anspruch 1,
**dadurch gekennzeichnet, daß** die Anlage geeignet ist, ein Verfahren durchzuführen, bei dem die Melkdauer variabel einstellbar ist.

3. Anlage nach Anspruch 1 oder 2,
**dadurch gekennzeichnet, daß** die Anlage geeignet ist, ein Verfahren durchzuführen, bei dem die Melkdauer für jedes Tier einstellbar ist.

4. Anlage nach Anspruch 1 oder 2,
**dadurch gekennzeichnet, daß** die Melkdauer automatisch einstellbar ist.

5. Anlage nach einem der vorhergehenden Ansprüche,
**dadurch gekennzeichnet, daß** die Vorrichtung mit einem Sensor versehen ist, mittels dessen die Milchmenge des Tieres pro Zeiteinheit während des Melkens ermittelt werden kann.

6. Anlage nach Anspruch 5,
**dadurch gekennzeichnet, daß** während des Melkens eines Tieres die von dem Sensor ermittelte Milchmenge pro Zeiteinheit für jedes Tier in den Speicher des Computers eingegeben wird.

7. Anlage nach Anspruch 5 oder 6,
**dadurch gekennzeichnet, daß** der Computer einen Rechner umfaßt, mit dessen Hilfe Änderungen der Milchmenge pro Zeiteinheit während des Melkens berechnet werden.

8. Anlage nach einem der Ansprüche 5 bis 7,
**dadurch gekennzeichnet, daß** in den Speicher des Computers mindestens ein Grenzwert eingegeben werden kann, um die Milchmenge pro Zeiteinheit in Strömungsphasen zu unterteilen.

9. Anlage nach einem der vorhergehenden Ansprüche,
**dadurch gekennzeichnet, daß** die Einstellvorrichtung eine Vakuum- und/oder eine Milchpumpe umfaßt, die an einen oder mehrere Zitzenbecher angeschlossen sind/ist.

10. Anlage nach Anspruch 9,
**dadurch gekennzeichnet, daß** die Leistung der Vakuum- und/oder der Milchpumpe variabel einstellbar ist.

11. Anlage nach Anspruch 10,
**dadurch gekennzeichnet, daß** die Einstellvorrichtung einen Steuermechanismus umfaßt, mittels dessen die Vakuum- und/oder die Milchpumpe auf der Basis der Änderungen der Milchmenge pro Zeiteinheit während des Melkens eingestellt wird.

12. Anlage nach einem der vorhergehenden Ansprüche,
**dadurch gekennzeichnet, daß** die Einstellvorrichtung eine Zeiteinstellvorrichtung umfaßt, mittels der die Dauer eines Melkvorganges für jedes Tier einstellbar ist.

13. Anlage nach einem der vorhergehenden Ansprüche,
**dadurch gekennzeichnet, daß** in der Zeiteinstellvorrichtung aufgezeichnet ist, daß die Dauer des Melkvorganges etwa 3 Minuten beträgt.

14. Anlage nach einem der vorhergehenden Ansprüche,
**dadurch gekennzeichnet, daß** der Computer geeignet ist, auf der Basis der von dem Sensor ermittelten Milchmenge pro Zeiteinheit und der davon abgeleiteten Milchmenge die Dauer des Melkvorgangs in der Weise zu ermitteln, daß eine hohe Milchleistung pro Tier erzielt wird.

15. Anlage nach einem der vorhergehenden Ansprüche,
**dadurch gekennzeichnet, daß** die Vorrichtung einen Melkroboter zum automatischen Anschließen von Zitzenbechern an die Zitzen eines zu melkenden Tieres umfaßt.

16. Anlage nach einem der vorhergehenden Ansprüche,
**dadurch gekennzeichnet, daß** die Vorrichtung einen Sensor umfaßt, mittels dessen die Milchdurchflußmenge ermittelt wird.

17. Anlage nach Anspruch 16,
**dadurch gekennzeichnet, daß** die Vorrichtung einen Rechner umfaßt, der auf der Basis der Milchdurchflußmenge die Menge der erzeugten Milch ermittelt.

18. Anlage nach einem der vorhergehenden Ansprüche,
**dadurch gekennzeichnet, daß** der Computer einen Speicher umfaßt, der für jedes Tier aufzeichnen kann, welches Tier gemolken wurde, und welche die optimale Milchleistung pro Tier und/oder pro Euterviertel ist.

19. Anlage nach einem der vorhergehenden Ansprüche,
**dadurch gekennzeichnet, daß** die Vorrichtung ein Signal liefern kann, wenn der Melkvorgang beendet ist.

20. Anlage nach Anspruch 19,
**dadurch gekennzeichnet, daß** das gelieferte Signal ein Steuersignal ist, das geeignet ist, den Melkroboter außer Betrieb zu setzen.

21. Anlage nach einem der vorhergehenden Ansprüche,
**dadurch gekennzeichnet, daß** die Anlage mindestens eine Luftpumpe und eine Flüssigkeitspumpe umfaßt.

22. Anlage nach Anspruch 21,
**dadurch gekennzeichnet, daß** die Milchleistung mit Hilfe einer weiteren Pumpe gesteuert werden kann.

23. Anlage nach einem der vorhergehenden Ansprüche,
**dadurch gekennzeichnet, daß** eine weitere Pumpe die Milchdurchflußmenge steuern kann.

## Revendications

1. Structure contenant une machine à traire des animaux, tels que des vaches, la machine étant pourvue de moyens de réglage à l'aide desquels il est possible de régler la durée de la traite, c'est-à-dire la période de temps pendant laquelle l'animal est trait, les moyens de réglage comprenant un ordinateur, **caractérisée en ce que** l'ordinateur convient pour comparer le rendement laitier présent au rendement laitier optimal et **en ce que**, lorsque le rendement laitier présent a atteint le rendement laitier optimal, la traite est terminée, de telle sorte que la machine à traire est utilisée uniquement pendant la période de temps pendant laquelle la vache donne son lait au débit le plus élevé.

2. Structure selon la revendication 1,
**caractérisée en ce que** la structure convient pour réaliser un processus dans lequel la durée de la traite peut être réglée de façon variable.

3. Structure selon la revendication 1 ou 2, **caractérisée en ce que** la structure convient pour réaliser un processus dans lequel la durée de la traite peut être réglée par animal.

4. Structure selon la revendication 1 ou 2, **caractérisée en ce que** la durée de la traite peut être réglée automatiquement.

5. Structure selon l'une quelconque des revendications précédentes, **caractérisée en ce que** la machine est pourvue d'un capteur au moyen duquel la quantité de lait par unité de temps de l'animal peut être établie pendant la traite.

6. Structure selon la revendication 5,
**caractérisée en ce que** pendant la traite d'un animal, la quantité de lait par unité de temps établie par le capteur est entrée par animal dans la mémoire de l'ordinateur.

7. Structure selon la revendication 5 ou 6, **caractérisée en ce que** l'ordinateur comprend des moyens de calcul à l'aide desquels les changements de la quantité de lait par unité de temps sont calculés pendant la traite.

8. Structure selon l'une quelconque es revendications 5 à 7, **caractérisée en ce que** la mémoire de l'ordinateur convient pour entrer au moins une valeur seuil destinée à diviser la quantité de lait par unité de temps en périodes d'écoulement.

9. Structure selon l'une quelconque des revendications précédentes, **caractérisée en ce que** les moyens de réglage comprennent une pompe à vide et/ou à lait qui est/sont raccordée(s) à un ou plusieurs gobelet(s) trayeur(s).

10. Structure selon la revendication 9,
**caractérisée en ce que** la capacité de la pompe à vide et/ou à lait peut être réglée de façon variable.

11. Structure selon la revendication 10,
**caractérisée en ce que** les moyens de réglage comprennent un mécanisme de commande à l'aide duquel la pompe à vide et/ou à lait est réglée sur la base des changements de la quantité de lait par unité de temps pendant la traite.

12. Structure selon l'une quelconque des revendications précédentes, **caractérisée en ce que** les moyens de réglage comprennent des moyens de réglage du temps à l'aide desquels la durée d'une traite peut être réglée par animal.

13. Structure selon l'une quelconque des revendications précédentes, **caractérisée en ce qu'**il a été enregistré dans les moyens de réglage du temps que la durée de la phase de la traite s'élève à approximativement 3 minutes.

14. Structure selon l'une quelconque des revendications précédentes, **caractérisée en ce que** l'ordinateur convient pour calculer, sur la base de la quantité de lait par unité de temps déterminée par le capteur et la quantité de lait déduite de celle-ci, la durée de la phase de la traite, d'une manière telle qu'on obtient une production de lait élevée par animal.

15. Structure selon l'une quelconque des revendications précédentes, **caractérisée en ce que** la machine comprend un robot de traite destiné à raccorder automatiquement des gobelets trayeurs aux trayons d'un animal destiné à être trait.

16. Structure selon l'une quelconque des revendications précédentes, **caractérisée en ce que** la machine comprend un capteur à l'aide desquels est déterminé le débit de la traite.

17. Structure selon la revendication 16,
**caractérisée en ce que** la machine comprend une unité de calcul qui, sur la base du débit de la traite, détermine la quantité de lait produite.

18. Structure selon l'une quelconque des revendications précédentes, **caractérisée en ce que** l'ordinateur comprend une mémoire qui convient pour enregistrer par animal quel animal a été trait et quelle est la production de lait optimale par animal et/ou par quartier de pis.

19. Structure selon l'une quelconque des revendications précédentes, **caractérisée en ce que** la machine convient pour fournir un signal lorsque la traite est terminée.

20. Structure selon la revendication 19,
**caractérisée en ce que** le signal fourni est un signal de commande qui convient pour mettre le robot de traite hors service.

21. Structure selon l'une quelconque des revendications précédentes, **caractérisée en ce que** la structure comprend au moins une pompe à air et une pompe à liquide.

22. Structure selon la revendication 21,
**caractérisée en ce que** la production de lait peut être commandée au moyen d'une autre pompe.

23. Structure selon l'une quelconque des revendications précédentes, **caractérisée en ce qu'**une autre pompe convient pour commander le débit de la traite.
